# EUROPEAN PATENT SPECIFICATION

(11) **EP 0 785 956 B1**
(45) Date of publication and mention of the grant of the patent: **28.04.1999**
(21) Application number: 95938716.8
(22) Date of filing: 12.10.1995
(51) Int. Cl.: C08F 10/00, C08F 4/642, C08F 4/611

(54) **POLYMERIZATION CATALYST SYSTEMS, THEIR PRODUCTION AND USE**
Polymerisation Katalysatorsysteme, ihre Herstellung und ihre Verwendung
PRODUCTION ET UTILISATION DE SYSTEMES CATALYSEURS DE POLYMERISATION

(30) Priority: 13.10.1994 US 322675; 13.07.1995 US 502231
(43) Date of publication of application: 30.07.1997
(73) Proprietor: EXXON CHEMICAL PATENTS INC., Baytown, TX 77520-2149 (US); HOECHST AKTIENGESELLSCHAFT, 65926 Frankfurt am Main (DE)
(72) Inventor: SPECA, Anthony, Nicholas, Kingwood, TX 77345 (US); BRINEN, Jeffrey, Lawrence, League City, TX 77573 (US)
(74) Representative: Dew, Melvyn John
(86) International application number: US9512789
(87) International publication number: WO9611961

(56) References cited:
- EP-A- 0 435 514
- EP-A- 0 576 970
- EP-A- 0 638 595
- WO-A-92/05203
- DE-A- 4 242 486
- DIE MAKROMOLEKULARE CHEMIE, vol. 194, no. 12, December 1993 BASEL, pages 3499-3504, XP 000411898 SOGA KAZUO 'Activation of SiO2 supported zirconocene catalysts...'

## Description

### FIELD OF THE INVENTION

This invention relates to a method for the production of metallocene catalyst systems, catalyst systems resulting from such method and the use of such systems in olefin polymerization processes, The invention particularly relates to a method for preparing a supported metallocene catalyst system which is particularly suitable for use in gas phase and slurry polymerization processes and which results in improved reactor operability.

### BACKGROUND OF THE INVENTION

It is widely known that olefin polymerization processes utilizing bulky ligand transition metal catalysts, otherwise known as metallocene catalysts, have produced a diverse array of new polymers which are useful in a wide variety of applications and products.

A well known problem associated with the use of metallocene catalyst systems is their tendency to cause fouling and/or sheeting in gas phase and slurry polymerization processes. Fouling on the walls *of the* reactor and /or reactor components results in many serious problems including poor heat transfer, particle morphology, and reactor shut-down.

In an effort to solve these problems, many catalyst system modifications and modifications to the polymerization conditions have been reported. For example, U.S. Patent No.s 4,792,592; 4,808,667; 4,855,370; 4,876,320; 4,978,722; 5,026,795; 5,034,481; 5,037,905 are all directed toward the use of antistatic agents or other additives.

EP-A-0576970 discloses a supported catalyst comprising a bridged substituted bis indenyl metallocene catalyst component, a porous carrier and an alumoxane. The surface modifier component of the present invention is not disclosed.

While these approaches may reduce fouling or sheeting somewhat, they are not generally useful with all catalyst systems, they may be expensive to employ, and they may not reduce both fouling and sheeting to a level sufficient for the successful operation of a continuous process, particularly a commercial or large-scale process. Thus, it would be highly advantageous to have an improved metallocene catalyst system that in a polymerization process would significantly enhance reactor operability by reducing both fouling and sheeting.

### SUMMARY OF THE INVENTION

This invention is generally directed towards a method for the manufacture of supported metallocene catalyst systems to catalyst systems resulting from such methods and to the use of such catalyst systems in polymerization processes.

In one embodiment an improved method is provided to produce a supported bulky ligand transition metal catalyst system by contacting a porous support with a reaction product of a metallocene catalyst component, an alumoxane and a surface modifier, where the metallocene catalyst component is a chiral, Group 4, 5 or 6 transition metal, bridged, substituted bisindenyl.

In yet another embodiment of the invention, there is provided a process for producing propylene polyolefins by contacting propylene monomer, optionally with a comonomer in the presence of the catalyst system described above.

### DETAILED DESCRIPTION OF THE INVENTION

### Introduction

This invention is generally directed toward a supported catalyst system useful for polymerizing olefins. The method for forming the catalyst system of the invention results in a useful polymerization catalyst exhibiting improved reactor operability. The catalyst system of the invention not only reduces fouling and sheeting in a gas phase, slurry or liquid polymerization process but the catalyst system has better flow properties important to feeding the catalyst into the reactor. Also, the catalyst system of this invention results in a high bulk density polymer product having improved physical properties. Further, it has been discovered that the use of a surface modifier in the method of the invention protects the catalyst from direct or substantial reaction with scavenging components typically used to remove impurities These scavengers can interact with the components of the catalyst system to decrease catalyst activity and reactor operability.

Making the catalyst of the invention as described above results in a simple, commercially useful and cost effective supported catalyst system which exhibits a reduced tendency to cause sheeting or fouling during the polymerization of propylene polymers or copolymers without a significant reduction in catalytic activity.

According to the invention, there is provided a method for producing a supported catalyst system, said catalyst system comprising a metallocene catalyst component, an alumoxane and a porous carrier, said method comprising the step of combining an alumoxane, a surface modifier, a porous carrier, and a metallocene catalyst component wherein the surface modifier is represented by the formula: 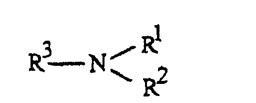 wherein R³ is hydrogen or a branched or linear alkyl group having 1 to 50 carbon atoms; R¹ and R² are independently the same as R³ or contain another heteroatom selected from O, N, P or S.
wherein the metallocene components comprise Group 4, 5 or 6 transition metal, biscyclopentadienyl derivatives, preferably bis-indenyl metallocene components having the following general structure: 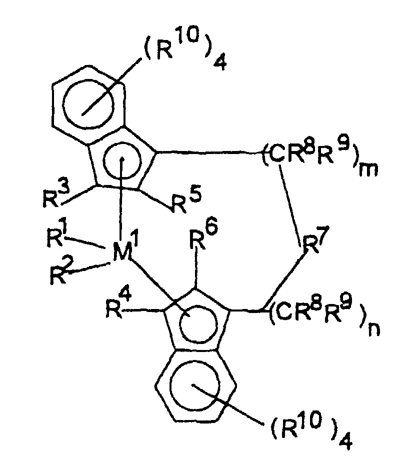 wherein M¹ is a metal of Group 4, 5, or 6 of the Periodic Table, for example titanium, zirconium, hafnium, vanadium niobium, tantalum, chromium, molybdenum and tungsten, preferably, zirconium, hafnium and titanium, most preferably zirconium;
R¹ and R² are identical or different, are one of a hydrogen atom, a C₁-C₁₀ alkyl group, preferably a C₁-C₃ alkyl group, a C₁-C₁₀ alkoxy group, preferably a C₁-C₃ alkoxy group, a C₆-C₁₀ aryl group, preferably a C₆-C₈ aryl group, a C₆-C₁₀ aryloxy group, preferably a C₆-C₈ aryloxy group, a C₂-C₁₀ alkenyl group, preferably a C₂-C₄ alkenyl group, a C₇-C₄₀ arylalkyl group, preferably a C₇-C₁₀ arylalkyl group, a C₇-C₄₀ alkylaryl group, preferably a C₇-C₁₂ alkylaryl group, a C₈-C₄₀ arylalkenyl group, preferably a C₈-C₁₂ arylalkenyl group, or a halogen atom, preferably chlorine;
R³ and R⁴ are hydrogen atoms;
R⁵ and R⁶ are identical or different, preferably identical, are one of a halogen atom, preferably a fluorine, chlorine or bromine atom, a C₁-C₁₀ alkyl group, preferably a C₁-C₄ alkyl group, which may be halogenated, a C₆-C₁₀ aryl group, which may be halogenated, preferably a C₆-C₈ aryl group, a C₂-C₁₀ alkenyl group, preferably a C₂-C₄ alkenyl group, a C₇-C₄₀ -arylalkyl group, preferably a C₇-C₁₀ arylalkyl group, a C₇-C₄₀ alkylaryl group, preferably a C₇-C₁₂ alkylaryl group, a C₈-C₄₀ arylalkenyl group, preferably a C₈-C₁₂ arylalkenyl group, a -NR₂¹⁵, -SR¹⁵, -OR¹⁵, -OSiR₃¹⁵ or -PR₂¹⁵ radical, wherein R¹⁵ is one of a halogen atom, preferably a chlorine atom, a C₁-C₁₀ alkyl group, preferably a C₁-C₃ alkyl group, or a C₆-C₁₀ aryl group, preferably a C₆-C₉ aryl group;
R⁷ is 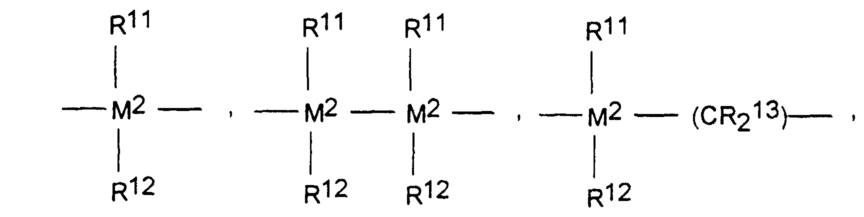 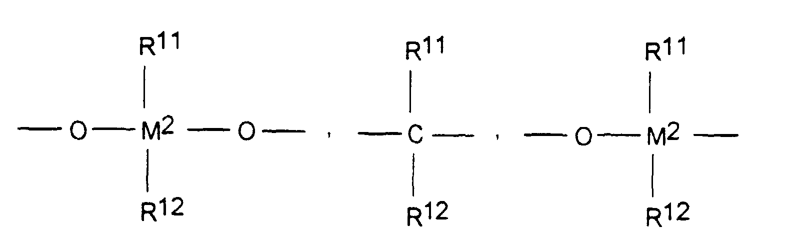 =BR¹¹,=AlR¹¹, -Ge-, -Sn-, -O-, -S-, = SO, =SO₂, =NR¹¹, =CO, =PR¹¹, or =P(O)R¹¹ ;
wherein:
R¹¹, R¹² and R¹³ are identical or different and are a hydrogen atom, a halogen atom, a C₁-C₂₀ alkyl group, preferably a C₁-C₁₀ alkyl group, a C₁-C₂₀ fluoroalkyl group, preferably a C₁-C₁₀ fluoroalkyl group, a C₆-C₃₀ aryl group, preferably a C₆-C₂₀ aryl group, a C₆-C₃₀ fluoroaryl group, preferably a C₆-C₂₀ fluoroaryl group, a C₁-C₂₀ alkoxy group, preferably a C₁-C₁₀ alkoxy group, a C₂-C₂₀ alkenyl group, preferably a C₂-C₁₀ alkenyl group, a C₇-C₄₀ arylalkyl group, preferably a C₇-C₂₀ arylalkyl group, a C₈-C₄₀ arylalkenyl group, preferably a C₈-C₂₂ arylalkenyl group, a C₇-C₄₀ alkylaryl group, preferably a C₇-C₂₀ alkylaryl group or R¹¹ and R¹², or R¹¹ and R¹³, together with the atoms binding them, can form ring systems;
M² is silicon, germanium or tin, preferably silicon or germanium, most preferably silicon;
R⁸ and R⁹ are identical or different and have the meanings stated for R¹¹;
m and n are identical or different and are zero, 1 or 2, preferably zero or 1, m plus n being zero, 1 or 2, preferably zero or 1; and
the radicals R¹⁰ are identical or different and have the meanings stated for R¹¹, R¹² and R¹³ wherein further two adjacent R¹⁰ radicals can be joined together to form a ring system, preferably a ring system containing from about 4-6 carbon atoms.

Alkyl refers to straight or branched chain substituents. Halogen (halogenated) is fluorine, chlorine, bromine or iodine atoms, preferably fluorine or chlorine.

Particularly preferred metallocenes are compounds of the structures: 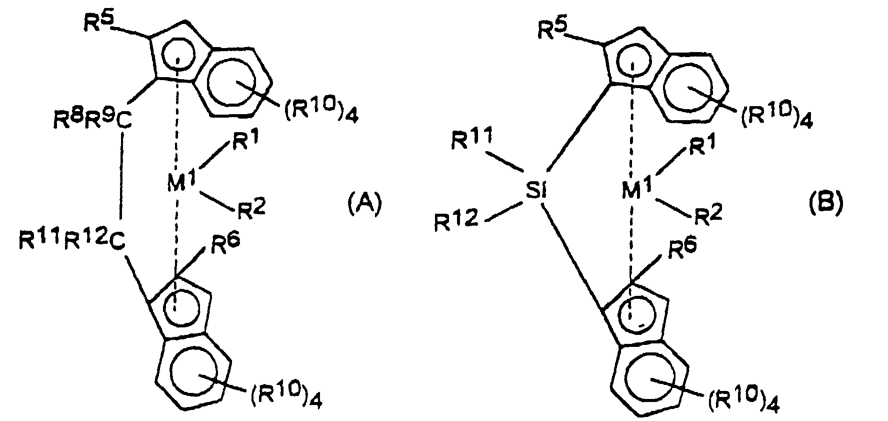 wherein:
M¹ is Zr or Hf, R¹ and R² are methyl or chlorine, and R⁵, R⁶ R⁸, R⁹,R¹⁰, R¹¹ and R¹² have the above-mentioned meanings.

The chiral metallocenes are used as a racemate for the preparation of highly isotactic polypropylene copolymers.

It is also possible to use the pure R or S form. An optically active polymer can be prepared with these pure stereoisomeric forms. It is preferred that the meso form of the metallocenes be removed to ensure the center (i.e., the metal atom) provides stereoregular polymerization.

Separation of the stereoisomers can be accomplished by known literature techniques. For special products it is also possible to use rac/meso mixtures.

Generally, the metallocenes are prepared by a multi-step process involving repeated deprotonations/metallations of the aromatic ligands and introduction of the bridge and the central atom by their halogen derivatives. The following reaction scheme illustrates this generic approach:

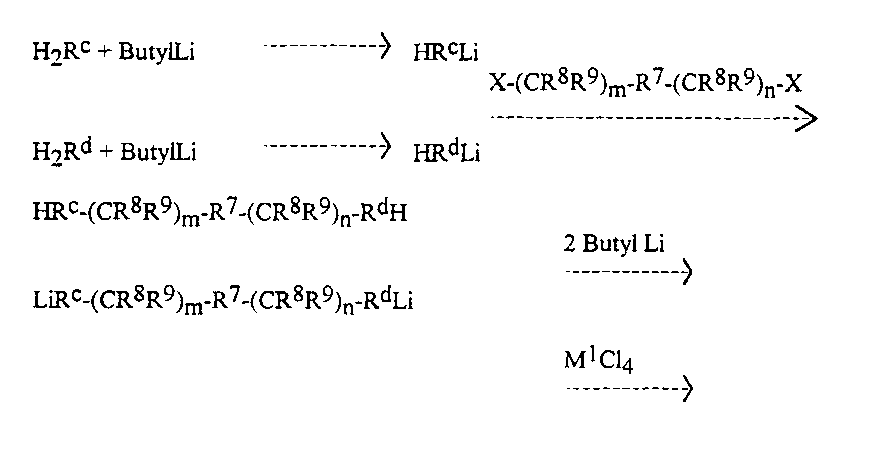

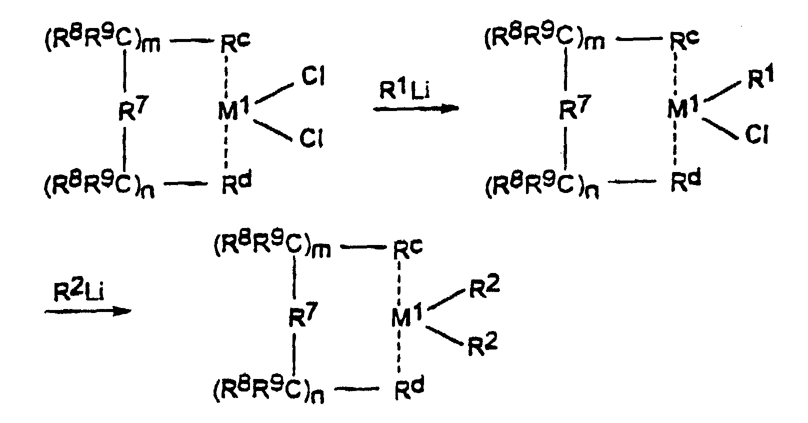

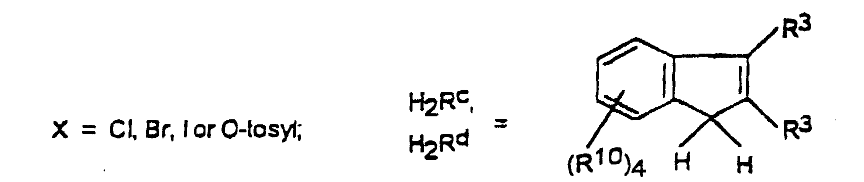

The reader is referred to the Journal of Organometallic Chem., volume 288 (1958), pages 63-67, and EP-A- 320762, for preparation of the metallocenes described.

Illustrative but non-limiting examples of metallocenes include:
Dimethylsilandiylbis (2-methyl-4-phenyl-1-indenyl)ZrCl₂
Dimethylsilandiylbis(2-methyl-4,5-benzo-1-indenyl)ZrCl₂;
Dimethylsilandiylbis(2-methyl-4,6-diisopropyl-1-indenyl)ZrCl₂;
Dimethylsilandiylbis(2-ethyl-4-phenyl-1-indenyl)ZrCl₂;
Phenyl(Methyl)silandiylbis(2-methyl4-phenyl-1-indenyl)ZrCl₂,
Dimethylsilandiylbis(2-methyl-4-(1-naphthyl)-1-indenyl)ZrCl₂.
Dimethylsilandiylbis(2-methyl-4-(2-naphthyl)-1-indenyl)ZrCl₂,
Dimethylsilandiylbis(2-methyl-4,5-diisopropyl-1-indenyl)ZrCl₂.
Dimethylsilandiylbis(2,4,6-trimethyl-1-indenyl)ZrCl₂,
Phenyl(Methyl)silandiylbis(2-methyl-4,6-diisopropyl-1-indenyl)ZrCl₂,
1,2-Ethandiylbis(2-methyl-4,6-diisopropyl-1-indenyl)ZrCl₂,
1,2-Butandiylbis(2-methyl-4,6-diisopropyl-1-indenyl)ZrCl₂,
Dimethylsilandiylbis(2-methyl-4-ethyl-1-indenyl)ZrCl₂,
Dimethylsliandiylbis(2-methyl-4-isopropyl-1-indenyl)ZrCl₂.
Dimethylsilandiylbis(2-methyl-4-t-butyl-1-indenyl)ZrCl₂,
Phenyl(Methyl)silandiylbis(2-methyl-4-isopropyl-1-indenyl)ZrCl₂,
Dimethylsilandiylbis(2-ethyl-4-methyl-1-indenyl)ZrCl₂,
Dimethylsilandiylbis(2,4-dimethyl-1-indenyl)ZrCl₂,
Dimethylsilandiylbis(2-methyl-4-ethyl-1-indenyl)ZrCl₂,
Dimethylsilandiylbis(2-methyl-α-acenaphth-1-indenyl)ZrCl₂,
Phenyl(Methyl)silandiylbis(2-methyl-4,5-benzo-1-indenyl)ZrCl₂,
Phenyl(Methyl)silandiylbis(2-methyl-4,5-(methylbenzo)-1-indenyl)ZrCl₂,
Phenyl(Methyl)silandiylbis(2-methyl-4,5-(tetramethylbenzo)-1-indenyl)ZrCl₂,
Phenyl(Methyl)silandiylbis (2-methyl-a-acenaphth-1-indenyl)ZrCl₂,
1,2-Ethandiylbis(2-methyl-4,5-benzo-1-indenyl)ZrCl₂,
1,2-Butandiylbis(2-methyl-4,5-benzo-1-indenyl)ZrCl₂,
Dimethylsilandiylbis(2-methyl-4,5-benzo-1-indenyl)ZrCl₂,
1,2-Ethandiylbis(2,4,7-trimethyl-1-indenyl)ZrCl₂,
Dimethylsilandiylbis(2-methyl-1-indenyl)ZrCl₂,
1,2-Ethandiylbis(2-methyl-1-indenyl)ZrCl₂,
Phenyl(Methyl)silandiylbis(2-methyl-1-indenyl)ZrCl₂,
Diphenylsilandiylbis(2-methyl-1-indenyl)ZrCl₂,
1,2-Butandiylbis(2-methyl-1-indenyl)ZrCl₂,
Dimethylsilandiylbis(2-ethyl-1-indenyl)ZrCl₂,
Dimethylsilandiylbis(2-methyl-5-isobutyl-1-indenyl)ZrCl₂,
Phenyl(Methyl)silandiylbis(2-methyl-5-isobutyl-1-indenyl)ZrCl₂.
Dimethylsilandiylbis(2-methyl-5-t-butyl-1-indenyl)ZrCl₂,
Dimethylsilandiylbis(2,5,6-trimethyl-1-indenyl)ZrCl₂.

The metallocene catalyst components of this invention are described in detail in U.S. Patent Nos. 5,149,819, 5,243,001, 5,239,022, 5,296,434 and 5,276,208 all of which are herein fully incorporated by reference.

### Activator Components

The activator or cocatalyst component of the present invention is alumoxane.

Generally, the alkylalumoxanes preferred for use in olefin polymerization contain about 4 to 20 of the repeating units: 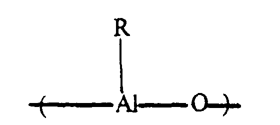 where R is a C₁-C₈ alkyl including mixed alkyls. Particularly preferred are the compounds where R is methyl. There are a variety of methods for preparing alumoxane, non-limiting examples of which are described in U.S. Patent No. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137, 5,103,031 and EP-A-0 561 476, EP-B1-0 279 586, EP-A-0 594-218 and WO 94/10180.

Some methylalumoxane (MAO) solutions tend to become cloudy and gelatinous over time. It may be advantageous to clarify such solutions prior to use. A number of methods may be used to create gel-free MAO solutions or to remove gels from the solutions. Gelled solutions are often simply shaken or decanted. U.S. Patent No. 5,157,137 discloses a process for forming clear, gel-free solutions of alkylalumoxane by treating a solution of alkylalumoxane with an anhydrous salt and/or hydride of an alkali or alkaline earth metal.

### Support Mediums

For purposes of this patent specification the terms "carrier" or "support" are interchangeable and can be any porous support material, such as for example, talc, inorganic oxides, inorganic chlorides, for example magnesium chloride and resinous support materials such as polystyrene or polystyrene-divinyl benzene, polyolefins or polymeric compounds or any other organic support material or mixtures thereof.

The preferred support materials are inorganic oxide materials, which include those of Groups 2, 3, 4, 5, 13 or 14 metal oxides. In a preferred embodiment, the catalyst support materials include silica, alumina, silica-alumina, and mixtures thereof. Other inorganic oxides that may be employed either alone or in combination with the silica, alumina or silica-alumina are magnesia, titania, zirconia.

Preferably, the support has a surface area in the range of from 10 to 700 m²/g, a pore volume in the range of from 0.1 to 4.0 cm³/g and an average particle size in the range of from 10 to 500 µm. More preferably, the support surface area is in the range of from 50 to 500 m²/g, the pore volume is in the range of from 0.5 to 3.5 cm³/g and the average particle size is in the range of from 20 to 200 µm. Most preferably the surface area range is from 100 to 400 m²/g, the pore volume is from 0.8 to 3.0 cm³/g and the average particle size is from 10 to 100 µm. The pore size of the carrier of the invention is preferably in the range of from 10 to 1000 Å, preferably from 50 to 500 Å, and most preferably from about 75 to 350 Å, (1 Å = 0.1 nm).

### Surface Modifiers

The surface modifier may be expressed by the formula: 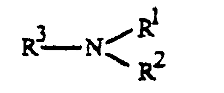 where R³ is hydrogen or a branched or preferably a straight chain alkyl group having 1 to 50 carbon atoms. R¹ and R² may be the same or different and may be the same as R³ or contain another heteroatom such as O, N, P or S.

In another embodiment, the surface modifier is represented by the following formula for an alkoxylated tertiary amine: 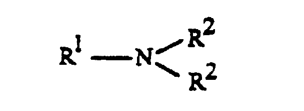 where R¹ may be hydrogen or a (linear or branched) alkyl group of from 1 to 50 carbon atoms; R² may be a hydroxy group such a (CH₂)ₓOH radical where x is an integer from 1 to 50, preferably 2 to 25. Non-limiting examples include Kemamine AS-990 (available from Witco Chemical Corporation, Houston, Texas) having the formula C₁₈H₃₇N(CH₂CH₂OH)₂ and Kemamine AS-650 (also available from Witco) having the formula C₁₂H₂₅N(CH₂CH₂OH)₂. Oliver surface modifiers may include bishydroxyethylcocoamine, 2,2-(octadecylamino)bis ethanol, and polyoxyethylene alkylamine.

Tertiary amines and ethoxylated amines are preferable surface modifiers.

### Methods of Producing the Catalyst Systems

The catalyst system of the invention can be made in a variety of different ways. Preferably the metallocene catalyst component and activator are combined to form a solution, which is then added to the carrier, followed by the addition of the surface modifier. In another embodiment, the metallocene component and activator solution are added to the carrier or vice-versa, the latter being preferred, then the resulting mixture, typically a slurry, is dried, optionally washed and redried, and then the surface modifier is added. In another embodiment the surface modifier is added to a metallocene and/or activator solution directly as a solid or liquid, and then the solution combined with the carrier.

In another embodiment the surface modifier is dry blended with a supported metallocene catalyst system formed by combining the carrier with the metallocene/alumoxane reaction product.

Optionally, the supported catalyst system is prepolymerized either before or after, preferably before, application of the surface modifier to the supported catalyst system.

In the preferred embodiment the metallocene catalyst component is typically slurried in a liquid to form a metallocene solution and a separate solution is formed containing an activator and a liquid. The liquid can be any compatible solvent or other liquid capable of forming a solution with at least one metallocene catalyst component and/or at least one activator. In the preferred embodiment the liquid is a cyclic aliphatic or aromatic hydrocarbon, most preferably toluene. The metallocene and activator solutions are then mixed together and added to a porous support such that the total volume of the metallocene solution and the activator solution or the metallocene and activator solution is less than four times the pore volume of the porous support, more preferably less than three times, even more preferably less than two times, and most preferably in the range of 0.8 to 3 times, preferably about 0.9 to about 1.5 times and most preferably in the range of 0.9 to 1.25 times. The surface modifier may be added at any stage during this preferred method of making the catalyst system. In the most preferred embodiment, however, the surface modifier is added after.

The weight percent of the surface modifier based on the total weight of the catalyst system is in the range of from 0.2 to 5 weight percent, more preferably from 0.25 to 3.5 weight percent and most preferably from 0.3 to 3.5 weight percent.

The procedure for measuring the total pore volume of a porous support is well known in the art. Details of one of these procedures is discussed in Volume *1, Experimental Methods in Catalytic Research* (Academic Press. 1968) (specifically see pages 67-96). This preferred procedure involves the use of a classical BET apparatus for nitrogen absorption. Another method well know in the art is described in Innes, *Total porosity and Particle Density of Fluid Catalysts By Liquid Titration,* Vol. 28, No. 3, Analytical Chemistry 332-334 (March, 1956).

The general support technique employed involves contacting, in a suitable solvent or other liquid, a metallocene catalyst component as described above with alumoxane or methylalumoxane (MAO) to form a soluble reaction product. The soluble reaction product is then contacted with a porous carrier, wherein the total volume of the soluble reaction product added to the carrier is less than four times the pore volume of the carrier. The resulting supported catalyst system can be dried to ensure that essentially all or most of the residual solvent is removed from the pores of the carrier before or after the introduction of a surface modifier. A free flowing supported catalyst system is thereby obtained.

In one embodiment, a method to produce a free flowing, optionally prepolymerized supported catalyst system is provided, the method comprising the steps of: a) forming in a suitable solvent, a metallocene/alumoxane mixture wherein the metallocene is as described above; b) contacting the mixture of (a) with a porous carrier; wherein the total volume of the mixture added to the porous carrier is less than four times the pore volume of the carrier; c) removing essentially all the solvent; d) introducing a surface modifier; e) obtaining a supported catalyst system; and f) optionally prepolymerizing said supported catalyst system with one or more olefinic monomer(s), to form a prepolymerized supported catalyst system. This supported catalyst system is useful for the production of polymers of propylene or copolymers thereof, having a molecular weight of 50,000 or greater, preferably 100.000 or greater, a melting point of about 125°C or greater, preferably 135°C or greater, and more preferably 145°C or greater and a bulk density of 0.30 g/cm³ or greater. The resulting granular polymer also has a preferred average particle size of 300 to 1000 µm or greater.

The catalyst system of the invention can be dried and still contain an amount of solvent, for example, toluene, in its dried state, however, it is preferred that substantially all the solvent is removed. For the purposes of this patent specification and appended claims the term "substantially all of the solvent is removed" means that greater than 90% of all the solvent is removed from the supported catalyst system when drying.

In another embodiment of the invention, the mole ratio of the metal of the alumoxane component to the transition metal of the metallocene component is in the range of ratios between 10:1 to 800:1, preferably 20:1 to less than 500:1, and most preferably 50:1 to less than 400:1.

### Polymerization Process of the Invention

The catalyst system of this invention is suited for the polymerization of monomers and optionally comonomers in any polymerization or prepolymerization process, gas, slurry or solution phase; even a high pressure autoclave process can be utilized. In the preferred embodiment a gas phase or slurry phase process is utilized, most preferably a bulk liquid propylene polymerization process.

In the preferred embodiment, this invention is directed toward bulk liquid propylene slurry or gas phase polymerization or copolymerization reactions involving the polymerization of propylene with one or more of the alpha-olefin monomers having from 4 to 20 carbon atoms, preferably 4-12 carbon atoms, for example alpha-olefin comonomers of ethylene, butene-1, pentene-1, 4-methylpentene-1, hexene-1, octene-1, decene-1, and cyclic olefins such as styrene. Other monomers can include polar vinyl, diolefins such as dienes, norbornene, acetylene and aldehyde monomers.

In one preferred embodiment, the process of the invention is carried out in the absence of or in an reactor environment that is essentially free of a scavenger material such as alkyaluminum compounds, for example, triethylaluminum, trimethylaluminum and isobutylaluminum. For the purposes of this patent specification and appended claims the term "essentially free" means that less than 100 ppm by weight of scavenger is present in the reactor at any given point in time during polymerization.

### EXAMPLES

In order to provide a better understanding of the present invention including representative advantages and limitation thereof, the following examples are offered.

### EXAMPLE 1

### PREPARATION OF CATALYST A

To a two gallon (7.6 liter) reactor previously flushed with N₂ was added 3900 mL of methylalumoxane (MAO) in toluene (available from Witco Chemical Company, Houston, Texas, 10 wt% MAO solution) followed by 9.0 g of dimethylsilylbis(2-methyl-4,5-benzo-1-indenyl)zirconium dichloride dissolved in an additional 350 mL of MAO. The combined solutions were stirred for 10 minutes. As stirring continued, 400 g of silica (Davison Grade MS948FF, previously dehydrated to 800°C under flowing N₂, available from W.R. Grace, Davison Chemical Division, Baltimore, Maryland) was added over 10 minutes. The toluene was removed under a slow N₂ purge while raising temperature and vacuum to 68° C and 25 in. (64 cm) of Hg to give a free flowing solid. The catalyst solid was washed four times with 5-7 liters of hexane each and the final wash decanted. After a second drying as above 560 g of a free flowing solid was obtained. 250 g of the catalyst was charged to the reactor previously loaded with 4 liters of hexane and 5 mL of a 25 wt% solution of triisobutylaluminum in hexane (available from Witco). Under stirring the slurry was cooled to 1-2°C and a cylinder containing ethylene and hydrogen (3 mol% H₂, Matheson Gas Products) was connected to the reactor. The gas was added to the vapor phase at a flow rate of 0.08-0.17 cubic feet per minute (38-80 cm³ per second) to control the slurry temperature to less than about 5°C. After 90 minutes N₂ was used to purge the excess ethylene and hydrogen. The prepolymerized catalyst slurry was washed four times with 5-7 liters of hexane each and the final wash decanted. After drying under vacuum solid catalyst A was recovered.

### POLYMERIZATION

All the catalysts prepared were polymerized in accordance with the following procedure. A 2 liter autoclave reactor previously flushed with N₂ and containing triethylaluminum (0.5 mL of a 1 M solution in hexane) and 1000 mL of propylene was heated to a temperature of 74°C. The catalyst sample was slurried in 2 mL of hexane. The catalyst was charged to the reactor with a flush of 250 mL propylene to start the reaction. After one hour the reactor was cooled, vented and purged with N₂ for 20 minutes and then opened. The condition of the polymer and fouling level of the reactor was noted. After removal from the reactor, the polymer was dried for a minimum of 2 hours at 75°C in vacuo. After recovery the dried polymer was weighed and the activity is calculated.

### EXAMPLE 2

A 205 mg sample of catalyst A prepared above in Example 1 was dry blended with 4 mg of Kemamine AS990 (available from Witco) and placed in a catalyst charge tube along with 2 mL of hexane then added to the reactor as described above. Polymerization was carried out as described in Example 1. After one hour the polymerization was stopped. Inspection of the reactor showed no fouling and free flowing, granular polymer. 234 g of dried polymer was recovered equivalent to 1.14 Kg of polypropylene per g of catalyst charged.

### COMPARATIVE EXAMPLE 3

A 200 mg sample of the catalyst A used in Example 2 was used but without Kemamine AS990. Polymerization was carried out as described in Example 1. After one hour the polymerization was stopped. Inspection of the reactor showed fouling on the stirring shaft and reactor walls. 232 g of dried polymer was recovered equivalent to 1.16 Kg of polypropylene per g of catalyst charged. Results are shown in Table 1.

### EXAMPLE 4 and COMPARATIVE EXAMPLE 5

### PREPARATION OF CATALYST B

A second prepolymerized catalyst (B) was prepared in an identical manner to catalyst A. A 203 mg sample of prepolymerized catalyst B was tested for propylene polymerization with and without Kemamine AS990. Polymerization was carried out as described in Example 1. Results are shown in Table 1.

### COMPARATIVE EXAMPLE 6

This particular example illustrates adding the Kemamine AS990 to the catalyst was unexpectedly better than adding it to the reactor. A 4 mg sample of the Kemamine AS990 was added to the reactor along with triethylaluminum and propylene. A 200 mg sample of Catalyst A was charged to the reactor with 250 ml of propylene to start the reaction. Polymerization was carried out as described in Example 1. Results are shown in Table 1.

**TABLE 1**

| Examples | Catalyst | Surface Modifier | | Activity (Kg/g cat) | Fouled |
|---|---|---|---|---|---|
| | | Wt % | Added to.... | | |
| 2 | A | 2 | Catalyst | 1.14 | No |
| Comp. 3 | A | 0 | - | 1.16 | Yes |
| 4 | B | 2 | Catalyst | 1.49 | No |
| Comp. 5 | B | 0 | - | 1.53 | Yes |
| Comp. 6 | A | 2 | Reactor | 0.375 | Yes |

In summary, the data shows that when dry blended with the catalyst of the invention, 2 wt% of a surface modifier, Kemamine AS990, eliminated reactor fouling with little impact on catalyst activity. Where the surface modifier is added to the reactor separately from the catalyst, fouling is not eliminated and catalyst activity is diminished by more than 65%.

## Claims

1. A method for producing a supported catalyst system, said catalyst system comprising a metallocene catatyst component, an alumoxane and a porous carrier, said method comprising the step of combining an alumoxane, a surface modifier, a porous carrier, and a metallocene catalyst component wherein the surface modifier is represented by the formula: 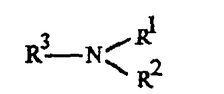 wherein R³ is hydrogen or a branched or linear alkyl group having 1 to 50 carbon atoms; R¹ and R² are independently the same as R³ or contain another heteroatom selected from O, N, P or S
and wherein the metallocene is represented by the formula: 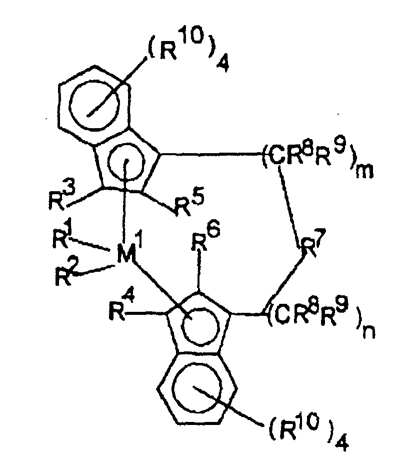 wherein M¹ is a metal of group 4, 5, or 6 of the Periodic Table,
R¹ and R² are identical or different, and are one of a hydrogen atom, a C₁-C₁₀ alkyl group, a C₁-C₁₀ alkoxy group, a C₆-C₁₀ aryl group, a C₆-C₁₀ aryloxy group, a C₂-C₁₀ alkenyl group, a C₇-C₄₀ arylalkyl group, a C₇-C₄₀ alkylaryl group, a C₈-C₄₀ arylalkenyl group, or a halogen atom;
R³ and R⁴ are hydrogen atoms;
R⁵ and R⁶ are identical or different, preferably identical, are one of a halogen atom, a C₁-C₁₀ alkyl group, which may be halogenated, a C₆-C₁₀ aryl group, which may be halogenated, a C₂-C₁₀ alkenyl group, a C₇-C₄₀ arylalkyl group, a C₇-C₄₀ alkylaryl group, a C₈-C₄₀ arylalkenyl group, a -NR₂¹⁵, -SR¹⁵, - OR¹⁵, -OSiR₃¹⁵ or -PR₂¹⁵ radical, wherein R¹⁵ is one of a halogen atom, a C₁-C₁₀ alkyl group, or a C₆-C₁₀ aryl group;
R⁷ is 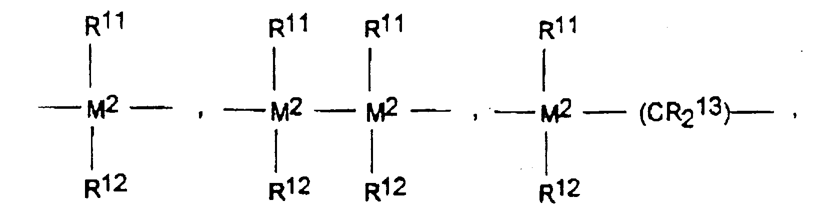 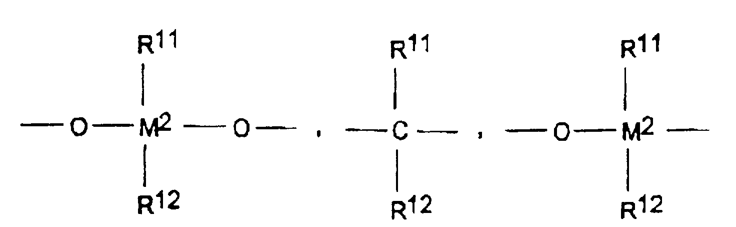 =BR¹¹,=AlR¹¹, -Ge-, -Sn-, -O-, -S-, = SO, =SO₂, =NR¹¹, =CO, -PR¹¹, or =P(O)R¹¹ ;
wherein:
R¹¹, R¹² and R¹³ are identical or different and are a hydrogen atom, a halogen atom, a C₁-C₂₀ alkyl group, a C₁-C₂₀ fluoroalkyl group, a C₆-C₃₀ aryl group, a C₆-C₃₀ fluoroaryl group, a C₁-C₂₀ alkoxy group, a C₂-C₂₀ alkenyl group, a C₇-C₄₀ arylalkyl group, a C₈-C₄₀ arylalkenyl group, C₇-C₄₀ alkylaryl group, or R¹¹ and R¹², or R¹¹ and R¹³, together with the atoms binding them, can form ring systems;
M² is silicon, germanium or tin;
R⁸ and R⁹ are identical or different and have the meanings as stated for R¹¹;
m and n are identical or different and are zero, 1 or 2, m plus n being zero, 1 or 2; and
the radicals R¹⁰ are identical or different and have the meanings stated for R¹¹, R¹² and R¹³ wherein further two adjacent R¹⁰ radicals can be joined together to form a ring system.

2. The method of claim 1 wherein the metallocene and alumoxane are combined first in a solvent to form a solution which is then applied to the porous carrier wherein the total volume of the solution is in the range of from 0.8 to 3.0 times the total pore volume of the porous carrier.

3. The method of claims 1 or 2 wherein the metallocene catalyst component comprises two or more metallocene catalyst components.

4. The method of any of the preceding claims further comprising the step of prepolymerizing the supported catalyst system with an olefinic monomer.

5. The method of any of the preceding claims wherein m=n=0 and M²=silicon.

6. The method of any of the preceding claims wherein R⁵ = R⁶ = C₁₋₁₀ alkyl.

7. The method of any of the preceding claims wherein three ofthe R¹⁰ radicals = hydrogen and one is a C₆₋₃₀ aryl group.

8. The method of any of the preceding claims wherein at least one of the R¹⁰ radicals is C₁₋₁₀ alkyl.

9. The method of any of the preceding claims wherein the metallocene component is selected from the group consisting of:
rac-dimethylsilandiylbis(2-methyl-4,5-benzo-1-indenyl) - zirconium dichloride,
rac-dimethylsilandiylbis(2-methyl-1-indenyl)-zirconium dichloride,
rac dimethylsilandiyl-bis(2-methyl-4,6-diisopropyl-1-indenyl)-zirconium
dichloride, rac-dimethylsilandiylbis(2-methyl-4-phenyl-1-indenyl)zirconium
dichloride, and rac-dimethylsilandiylbis(2-ethyl-4-phenyl-1-indenyl)zirconium dichloride.

10. The method of any of the preceding claims wherein the surface modifier is represented by the formula: 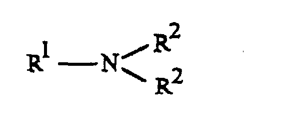 where R¹ is hydrogen or a linear or branched alkyl group of from 1 to 50 carbon atoms; R² is a hydroxy group of a (CH₂)_{X} radical and where x is an integer from 1 to 50 and wherein the surface modifier is present in an amount in the range of from 0.2 weight percent to less than 5 weight percent of the total weight of the supported catalyst system.

11. The method of any of the preceding claims wherein the surface modifier is selected from at least one of the group of compounds represented by the following chemical formulas:
C₁₈H₃₇N(CH₂CH₂OH)₂
and
C₁₂H₂₅N(CH₂CH₂OH)₂.

12. A method for producing a supported catalyst system, said catalyst system comprising a first component comprising a chiral, Group 4 transition metal, bridged, substituted bis -1-indenyl metallocene catalyst and a first solvent, a second component comprising an alumoxane and a second solvent, and a porous support, said method comprising the step of:
a) combining the first component and the second component to form a reaction product solution;
b) combining the reaction product solution and the porous support, such that at any point during the formation of the supported catalyst system the total volume of the reaction product added to the porous support is less than four times the total pore volume of the porous support; and
c) introducing a surface modifier represented by the formula: 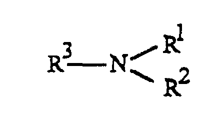 wherein R³ is hydrogen or a branched or linear alkyl group having 1 to 50 carbon atoms; R¹ and R² are independently the same as R³ or contain another heteroatom selected from O, N, P or S.

13. The method of claim 12 wherein the metallocene catalyst component is represented by the general formula: 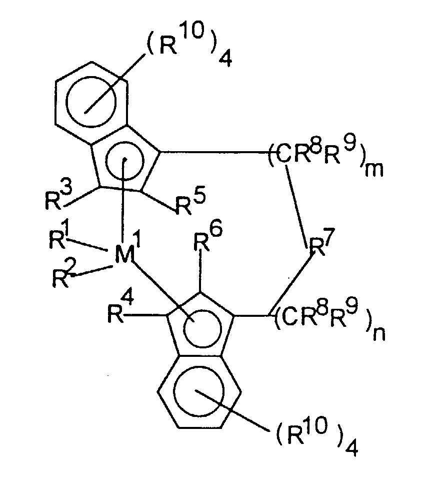 wherein: M¹ is a metal of group 4, 5, or 6 of the Periodic Table,
R¹ and R² are identical or different, are one of a hydrogen atom, a C₁-C₁₀ alkyl group, a C₁-C₁₀ alkoxy group, a C₆-C₁₀ aryl group, a C₆-C₁₀ aryloxy group, a C₂-C₁₀ alkenyl group, a C₇-C₄₀ arylalkyl group, a C₇-C₄₀ alkylaryl group, a C₈-C₄₀ arylalkenyl group, or a halogen atom;
R³ and R⁴ are hydrogen atoms;
R⁵ and R⁶ are identical or different, preferably identical, and are one of a halogen atom, a C₁-C₁₀ alkyl group, which may be halogenated, a C₆-C₁₀ aryl group, which may be halogenated, a C₂-C₁₀ alkenyl group, a C₇-C₄₀ arylalkyl group, a C₇-C₄₀ alkylaryl group, a C₈-C₄₀ arylalkenyl group, a -NR₂¹⁵, -SR¹⁵, - OR¹⁵, -OSiR₃¹⁵ or -PR₂¹⁵ radical, wherein R¹⁵ is one of a halogen atom, a C₁-C₁₀ alkyl group, or a C₆-C₁₀ aryl group;
R⁷ is 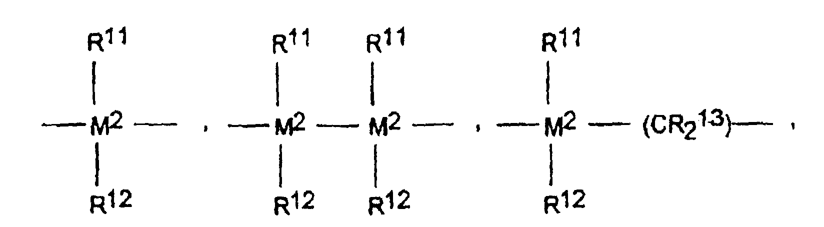 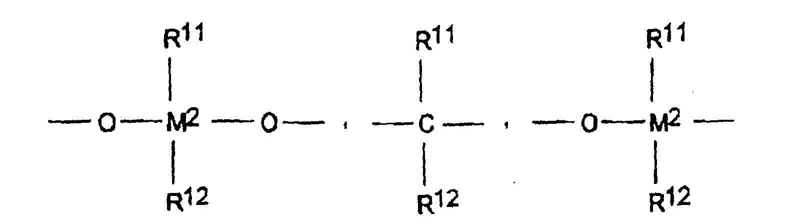 =BR¹¹, =AlR¹¹, -Ge-, -Sn-, -O-, -S-, = SO, =SO₂, =NR¹¹, =CO, PR¹¹, or =P(O)R¹¹;
wherein:
R¹¹, R¹² and R¹³ are identical or different and area hydrogen atom, a halogen atom, a C₁-C₂₀ alkyl group, a C₁-C₂₀ fluoroalkyl group, a C₆-C₃₀ aryl group, a C₆-C₃₀ fluoroaryl group, a C₁-C₂₀ alkoxy group, a C₂-C₂₀ alkenyl group, a C₇-C₄₀ arylalkyl group, a C₈-C₄₀ arylalkenyl group, C₇-C₄₀ alkylaryl group, or R¹¹ and R¹², or R¹¹ and R¹³, together with the atoms binding them, can form ring systems;
M² is silicon, germanium or tin;
R⁸ and R⁹ are identical or different and have the meanings as stated for R¹¹;
m and n are identical or different and are zero, 1 or 2, m plus n being zero, 1 or 2; and
the radicals R¹⁰ are identical or different and have the meanings stated for R¹¹, R¹² and R¹³ wherein further two adjacent R¹⁰ radicals can be joined together to form a ring system.

14. A supported catalyst system produced by the method of any of the preceding claims.

15. A process for polymerizing propylene alone or in combination with one or more other olefins, said process comprising polymerizing in the presence of the supported catalyst system of claim 14.

## Patentansprüche

1. Verfahren zur Herstellung eines trägergestützten Katalysatorsystems, wobei das Katalysatorsystem eine Metallocenkatalysatorkomponente, Alumoxan und porösen Träger umfaßt, bei dem Alumoxan, Oberflächenmodifizierungsmittel, poröser Träger und Metallocenkatalysatorkomponente kombiniert werden, wobei das Oberflächenmodifizierungsmittel durch die Formel 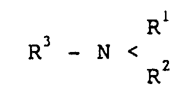 wiedergegeben wird, in der R³ Wasserstoff oder eine verzweigte oder lineare Alkylgruppe mit 1 bis 50 Kohlenstoffatomen ist, R¹ und R² unabhängig das gleiche wie R³ sind oder ein anderes Heteroatom ausgewählt aus O, N, P oder S enthalten,
und das Metallocen durch die Formel 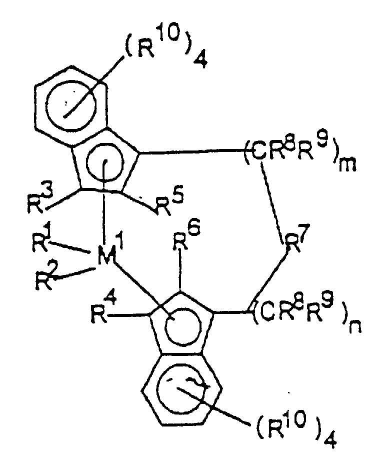 wiedergegeben wird, in der M¹ ein Metall der Gruppe 4, 5 oder 6 des Periodensystems ist,
R¹ und R² identisch oder unterschiedlich sind und eines von einem Wasserstoffatom, einer C₁- bis C₁₀-Alkylgruppe, einer C₁- bis C₁₀-Alkoxygruppe, einer C₆- bis C₁₀-Arylgruppe, einer C₆- bis C₁₀-Aryloxygruppe, einer C₂- bis C₁₀-Alkenylgruppe, einer C₇- bis C₄₀-Arylalkylgruppe, einer C₇- bis C₄₀-Alkylarylgruppe, einer C₈-bis C₄₀-Arylalkenylgruppe oder einem Halogenatom sind,
R³ und R⁴ Wasserstoffatome sind,
R⁵ und R⁶ identisch oder unterschiedlich, vorzugsweise identisch sind und eines von einem Halogenatom, einer C₁- bis C₁₀-Alkylgruppe, die halogeniert sein kann, einer C₆- bis C₁₀-Arylgruppe, die halogeniert sein kann, einer C₂- bis C₁₀-Alkenylgruppe, einer C₇- bis C₄₀-Arylalkylgruppe, einer C₇-bis C₄₀-Alkylarylgruppe, einer C₈- bis C₄₀-Arylalkenylgruppe, einem -NR¹⁵₂, -SR¹⁵, -OR¹⁵, -OSiR¹⁵₃ oder -PR¹⁵₂ Rest sind, wobei R¹⁵ eines von einem Halogenatom, einer C₁- bis C₁₀-Alkylgruppe oder einer C₆- bis C₁₀-Arylgruppe ist,
R⁷ 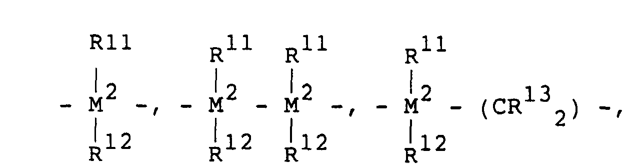 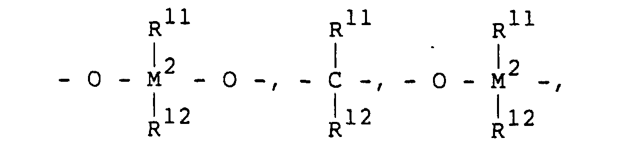 =BR¹¹, =AlR¹¹, -Ge-, -Sn-, -O-, -S-, =SO, =SO₂, =NR¹¹, =CO, =PR¹¹ oder =P(O)R¹¹ ist, wobei R¹¹, R¹² und R¹³ identisch oder unterschiedlich sind und ein Wasserstoffatom, ein Halogenatom, eine C₁- bis C₂₀-Alkylgruppe, eine C₁- bis C₂₀-Fluoralkylgruppe, eine C₆- bis C₃₀-Arylgruppe, eine C₆- bis C₃₀-Fluorarylgruppe, eine C₁- bis C₂₀-Alkoxygruppe, eine C₂- bis C₂₀-Alkenylgruppe, eine C₇- bis C₄₀-Arylalkylgruppe, eine C₈-bis C₄₀-Arylalkenylgruppe, eine C₇- bis C₄₀-Alkylarylgruppe sind, oder R¹¹ und R¹² oder R¹¹ und R¹³ zusammen mit den Atomen, an die sie gebunden sind, Ringsysteme bilden können, M² Silicium, Germanium oder Zinn ist,
R⁸ und R⁹ identisch oder unterschiedlich sind und die für R¹¹ angegebenen Bedeutungen haben,
m und n identisch oder unterschiedlich sind und Null, 1 oder 2 sind, m plus n Null, 1 oder 2 ist, und
die Reste R¹⁰ identisch oder unterschiedlich sind und die für R¹¹, R¹² und R¹³ angegebenen Bedeutungen haben, wobei ferner zwei benachbarte R¹⁰-Reste unter Bildung eines Ringsystems miteinander verbunden sein können.

2. Verfahren nach Anspruch 1, bei dem das Metallocen und Alumoxan zuerst in einem Lösungsmittel unter Bildung einer Lösung kombiniert werden, die dann auf den porösen Träger aufgebracht wird, wobei das Gesamtvolumen der Lösung im Bereich des 0,8 bis 3,0-fachen des gesamten Porenvolumens des porösen Trägers liegt.

3. Verfahren nach Anspruch 1 oder 2, bei dem die Metallocenkatalysatorkomponente zwei oder mehr Metallocenkatalysatorkomponenten umfaßt.

4. Verfahren nach einem der vorhergehenden Ansprüche, bei dem ferner das trägergestützte Katalysatorsystem mit olefinischem Monomer präpolymerisiert wird.

5. Verfahren nach einem der vorhergehenden Ansprüche, bei dem m = n = 0 ist und M² = Silicium ist.

6. Verfahren nach einem der vorhergehenden Ansprüche, bei dem R⁵ = R⁶ = C₁- bis C₁₀-Alkyl ist.

7. Verfahren nach einem der vorhergehenden Ansprüche, bei dem drei der R¹⁰-Reste Wasserstoff sind und einer eine C₆- bis C₃₀-Arylgruppe ist.

8. Verfahren nach einem der vorhergehenden Ansprüche, bei dem mindestens einer der R¹⁰-Reste C₁- bis C₁₀-Alkyl ist.

9. Verfahren nach einem der vorhergehenden Ansprüche, bei dem die Metallocenkomponente ausgewählt ist aus der Gruppe bestehend aus rac-Dimethylsilandiylbis(2-methyl-4,5-benzo-1-indenyl)zirconiumdichlorid, rac-Dimethylsilandiylbis(2-methyl-1-indenyl)zirconiumdichlorid, rac-Dimethylsilandiylbis(2-methyl-4,6-diisopropyl-1-indenyl)zirconiumdichlorid, rac-Dimethylsilandiylbis(2-methyl-4-phenyl-1-indenyl)zirconiumdichlorid und rac-Dimethylsilandiylbis(2-ethyl-4-phenyl-1-indenyl)zirconiumdichlorid.

10. Verfahren nach einem der vorhergehenden Ansprüche, bei dem das Oberflächenmodifizierungsmittel durch die Formel 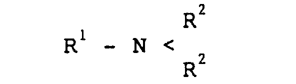 wiedergegeben wird, in der R¹ Wasserstoff oder eine lineare oder verzweigte Alkylgruppe mit 1 bis 50 Kohlenstoffatomen ist, R² eine Hydroxygruppe eines (CH₂)ₓ Rests ist und x eine Zahl von 1 bis 50 ist, wobei das Oberflächenmodifizierungsmittel in einer Menge im Bereich von 0,2 Gew.% bis weniger als 5 Gew.% des Gesamtgewichts des trägergestützten Katalysatorsystems vorhanden ist.

11. Verfahren nach einem der vorhergehenden Ansprüche, bei dem das Oberflächenmodifizierungsmittel ausgewählt ist aus mindestens einer aus der Gruppe von Verbindungen mit den folgenden chemischen Formeln:
C₁₈H₃₇N(CH₂CH₂OH)₂
und
C₁₂H₂₅N(CH₂CH₂OH)₂.

12. Verfahren zur Herstellung eines trägergestützten Katalysatorsystems, wobei das Katalysatorsystem eine erste Komponente, die einen chiralen, verbrückten, substituierten Bis-1-indenyl-Gruppe 4-Übergangsmetall-Metallocenkatalysator und ein erstes Lösungsmittel umfaßt, eine zweite Komponente, die Alumoxan und ein zweites Lösungsmittel umfaßt, und einen porösen Träger umfaßt, bei dem
a) die erste Komponente und die zweite Komponente unter Bildung einer Reaktionsproduktlösung kombiniert werden,
b) die Reaktionsproduktlösung und der poröse Träger so kombiniert werden, daß an jedem Punkt während der Bildung des trägergestützten Katalysatorsystems das Gesamtvolumen des Reaktionsprodukts, das zu dem porösen Träger gegeben wird, weniger als das Vierfache des gesamten Porenvolumens des porösen Trägers beträgt, und
c) Oberflächenmodifizierungsmittel mit der Formel 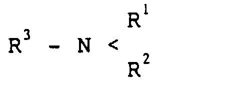 eingebracht wird, in der R³ Wasserstoff oder eine verzweigte oder lineare Alkylgruppe mit 1 bis 50 Kohlenstoffatomen ist, R¹ und R² unabhängig das gleiche wie R³ sind oder ein anderes Heteroatom ausgewählt aus O, N, P oder S enthalten.

13. Verfahren nach Anspruch 12, bei dem die Metallocenkatalysatorkomponente durch die allgemeine Formel 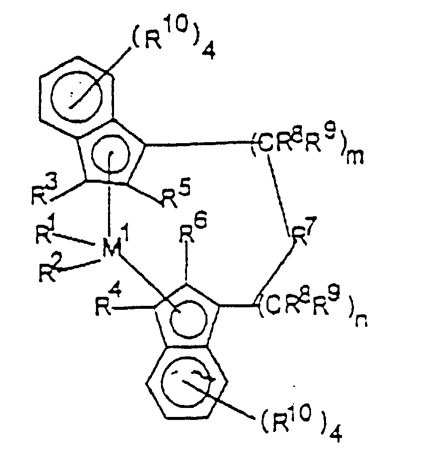 wiedergegeben wird, in der M¹ ein Metall der Gruppe 4, 5 oder 6 des Periodensystems ist,
R¹ und R² identisch oder unterschiedlich sind und eines von einem Wasserstoffatom, einer C₁- bis C₁₀-Alkylgruppe, einer C₁- bis C₁₀-Alkoxygruppe, einer C₆- bis C₁₀-Arylgruppe, einer C₆- bis C₁₀-Aryloxygruppe, einer C₂- bis C₁₀-Alkenylgruppe, einer C₇- bis C₄₀-Arylalkylgruppe, einer C₇- bis C₄₀-Alkylarylgruppe, einer C₈-bis C₄₀-Arylalkenylgruppe oder einem Halogenatom sind,
R³ und R⁴ Wasserstoffatome sind,
R⁵ und R⁶ identisch oder unterschiedlich, vorzugsweise identisch sind und eines von einem Halogenatom, einer C₁- bis C₁₀-Alkylgruppe, die halogeniert sein kann, einer C₆- bis C₁₀-Arylgruppe, die halogeniert sein kann, einer C₂- bis C₁₀-Alkenylgruppe, einer C₇- bis C₄₀-Arylalkylgruppe, einer C₇-bis C₄₀-Alkylarylgruppe, einer C₈- bis C₄₀-Arylalkenylgruppe, einem -NR¹⁵₂, -SR¹⁵, -OR¹⁵, -OSiR¹⁵₃ oder -PR¹⁵₂ Rest sind, wobei R¹⁵ eines von einem Halogenatom, einer C₁- bis C₁₀-Alkylgruppe oder einer C₆- bis C₁₀-Arylgruppe ist,
R⁷ 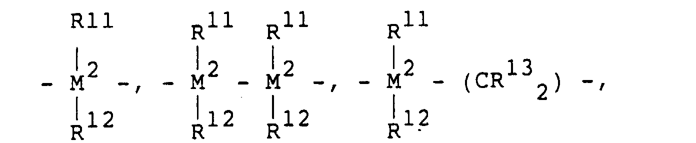 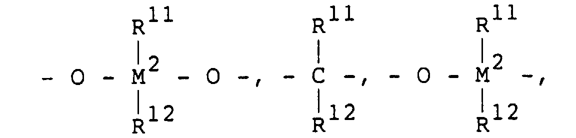 =BR¹¹, =AlR¹¹, -Ge-, -Sn-, -O-, -S-, =SO, =SO₂, =NR¹¹, =CO, =PR¹¹ oder =P(O)R¹¹ ist, wobei R¹¹, R¹² und R¹³ identisch oder unterschiedlich sind und ein Wasserstoffatom, ein Halogenatom, eine C₁- bis C₂₀-Alkylgruppe, eine C₁- bis C₂₀-Fluoralkylgruppe, eine C₆- bis C₃₀-Arylgruppe, eine C₆- bis C₃₀-Fluorarylgruppe, eine C₁- bis C₂₀-Alkoxygruppe, eine C₂- bis C₂₀-Alkenylgruppe, eine C₇- bis C₄₀-Arylalkylgruppe, eine C₈-bis C₄₀-Axylalkenylgruppe, eine C₇- bis C₄₀-Alkylarylgruppe sind oder R¹¹ und R¹² oder R¹¹ und R¹³ zusammen mit den Atomen, an die sie gebunden sind, Ringsysteme bilden können, M² Silicium, Germanium oder Zinn ist,
R⁸ und R⁹ identisch oder unterschiedlich sind und die für R¹¹ angegebenen Bedeutungen haben,
m und n identisch oder unterschiedlich sind und Null, 1 oder 2 sind, m plus n Null, 1 oder 2 ist, und
die Reste R¹⁰ identisch oder unterschiedlich sind und die für R¹¹, R¹² und R¹³ angegebenen Bedeutungen haben, wobei ferner zwei benachbarte R¹⁰-Reste unter Bildung eines Ringsystems miteinander verbunden sein können.

14. Trägergestütztes Katalysatorsystem, das nach dem Verfahren gemäß einem der vorhergehenden Ansprüche hergestellt ist.

15. Verfahren zum Polymerisieren von Propylen allein oder in Kombination mit einem oder mehreren anderen Olefinen, bei dem in Gegenwart des trägergestützten Katalysatorsystems gemäß Anspruch 14 polymerisiert wird.

## Revendications

1. Procédé pour la production d'une formulation de catalyseur sur un support, ladite formulation de catalyseur comprenant un constituant de catalyseur du type métallocène, un alumoxane et un support poreux, ledit procédé comprenant l'étape consistant à associer un alumoxane, un modificateur de surface, un support poreux et un constituant de catalyseur du type métallocène, ledit modificateur de surface étant représenté par la formule : 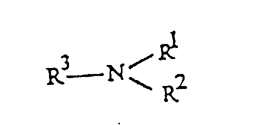 dans laquelle R³ représente l'hydrogène ou un groupe alkyle ramifié ou linéaire ayant 1 à 50 atomes de carbone ; R¹ et R² sont indépendamment identiques à R³ ou contiennent un autre hétéro-atome choisi entre O, N, P et S ;
et ledit métallocène étant représenté par la formule : 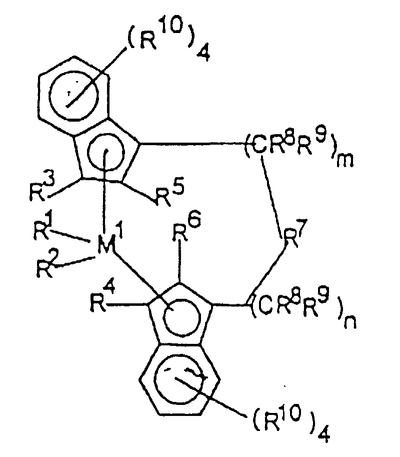 dans laquelle M¹ représente un métal du Groupe 4, 5 ou 6 du Tableau Périodique,
R¹ et R² sont identiques ou différents et sont choisis entre un atome d'hydrogène, un groupe alkyle en C₁ à C₁₀, un groupe alkoxy en C₁ à C₁₀, un groupe aryle en C₆ à C₁₀, un groupe aryloxy en C₆ à C₁₀, un groupe alcényle en C₂ à C₁₀, un groupe arylalkyle en C₇ à C₄₀, un groupe alkylaryle en C₇ à C₄₀, un groupe arylalcényle en C₈ à C₄₀, et un atome d'halogène ;
R³ et R⁴ représentent des atomes d'hydrogène ;
R⁵ et R⁶ sont identiques ou différents, de préférence identiques, et sont choisis entre un atome d'halogène, un groupe alkyle en C₁ à C₁₀, qui peut être halogéné, un groupe aryle en C₆ à C₁₀, qui peut être halogéné, un groupe alcényle en C₂ à C₁₀, un groupe arylalkyle en C₇ à C₄₀, un groupe alkylaryle en C₇ à C₄₀, un groupe arylalcényle en C₈ à C₄₀, et un radical -NR₂¹⁵, -SR¹⁵, -OR¹⁵, -OSiR₃¹⁵ ou -PR₂¹⁵, dans lequel R¹⁵ est choisi entre un atome d'halogène, un groupe alkyle en C₁ à C₁₀, un groupe aryle en C₆ à C₁₀ ;
R⁷ représente un groupe 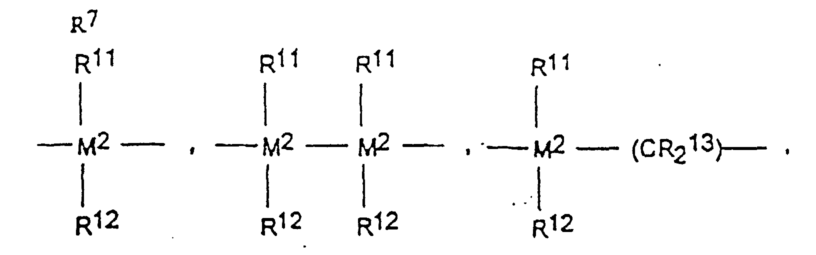 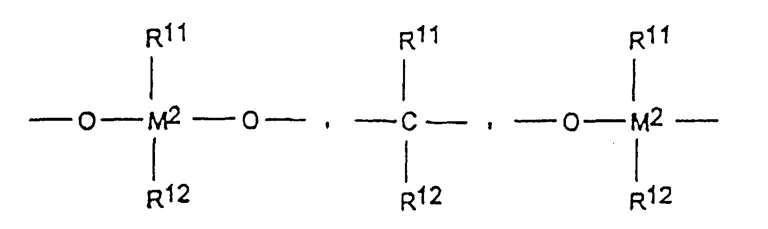 =BR¹¹,=AlR¹¹, -Ge-, -Sn-, -O-, -S-, = SO, =SO₂, =NR¹¹, =CO, PR¹¹, ou =P(O)R¹¹;
dans lequel :
R¹¹, R¹² et R¹³ sont identiques ou différents et représentent un atome d'hydrogène, un atome d'halogène, un groupe alkyle en C₁ à C₂₀, un groupe fluoralkyle en C₁ à C₂₀, un groupe aryle en C₆ à C₃₀, un groupe fluoroaryle en C₆ à C₃₀, un groupe alkoxy en C₁ à C₂₀, un groupe alcényle en C₂ à C₂₀, un groupe arylalkyle en C₇ à C₄₀, un groupe aryl-alcényle en C₈ à C₄₀, un groupe alkylaryle en C₇ à C₄₀, ou bien R¹¹ et R¹², ou R¹¹ et R¹³, conjointement avec les atomes qui les relient, peuvent former des systèmes cycliques ;
M² représente le silicium, le germanium ou l'étain ;
R⁸ et R⁹ sont identiques ou différents et répondent aux définitions mentionnées pour R¹¹ ;
m et n sont identiques ou différents et sont égaux à 0, 1 ou 2, la somme m + n étant égale à 0, 1 ou 2 ; et
les radicaux R¹⁰ sont identiques ou différents et répondent aux définitions indiquées pour R¹¹, R¹² et R¹³, deux radicaux R¹⁰ adjacents pouvant en outre être joints l'un à l'autre pour former un système cyclique.

2. Procédé suivant la revendication 1, dans lequel le métallocène et l'alumoxane sont associés tout d'abord dans un solvant pour former une solution qui est ensuite appliquée au support poreux, le volume total de la solution étant compris dans l'intervalle de 0,8 à 3,0 fois le volume total des pores du support poreux.

3. Procédé suivant la revendication 1 ou 2, dans lequel le constituant de catalyseur du type métallocène comprend deux ou plus de deux métallocènes.

4. Procédé suivant l'une quelconque des revendications précédentes, comprenant en outre l'étape consistant à prépolymériser la formulation de catalyseur sur le support avec un monomère oléfinique.

5. Procédé suivant l'une quelconque des revendications précédentes, dans lequel m = n = 0 et M² représente le silicium.

6. Procédé suivant l'une quelconque des revendications précédentes, dans lequel R⁵ = R⁶ = un groupe alkyle en C₁ à C₁₀.

7. Procédé suivant l'une quelconque des revendications précédentes, dans lequel trois des radicaux R¹⁰ représentent l'hydrogène et l'un représente un groupe aryle en C₆ à C₃₀.

8. Procédé suivant l'une quelconque des revendications précédentes, dans lequel au moins un des radicaux R¹⁰ représente un radical alkyle en C₁ à C₁₀.

9. Procédé suivant l'une quelconque des revendications précédentes, dans lequel le métallocène est choisi dans le groupe consistant en les composés suivants :
dichlorure de rac-diméthylsilanediylbis(2-méthyl-4,5-benzo-1-indényl)zirconium,
dichlorure de rac-diméthylsilanediylbis(2-méthyl-1-indényl)zirconium,
dichlorure de rac-diméthylsilanediylbis(2-méthyl-4,6-diisopropyl-1-indényl)zirconium,
dichlorure de rac-diméthylsilanediylbis(2-méthyl-4-phényl-1-indényl)zirconium, et
dichlorure de rac-diméthylsilanediylbis (2-éthyl-4-phényl-1-indényl)zirconium.

10. Procédé suivant l'une quelconque des revendications précédentes, dans lequel le modificateur de surface est représenté par la formule : 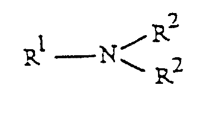 dans laquelle R¹ représente l'hydrogène ou un groupe alkyle linéaire ou ramifié ayant 1 à 50 atomes de carbone ; R² représente un groupe hydroxy d'un radical (CH₂)ₓ dans lequel x représente un nombre entier de 1 à 50, et le modificateur de surface est présent en une quantité comprise dans l'intervalle de 0,2 % en poids à moins de 5 % en poids du poids total de la formulation de catalyseur sur un support.

11. Procédé suivant l'une quelconque des revendications précédentes, dans lequel le modificateur de surface choisi consiste en au moins un des composés du groupe de composés représentés par les formules chimiques suivantes :
C₁₈H₃₇N (CH₂CH₂OH)₂
et
C₁₂H₂₅(CH₂CH₂OH)₂.

12. Procédé pour la production d'une formulation de catalyseur sur un support, ladite formulation de catalyseur comprenant un premier constituant comprenant un catalyseur consistant en un métallocène chiral consistant en un dérivé bis-1-indénylique de métal de transition du Groupe 4, ponté, substitué, et un premier solvant, un second constituant comprenant un alumoxane et un second solvant, et un support poreux, ledit procédé comprenant les étapes consistant :
a) à associer le premier constituant et le second constituant pour former une solution de produit réactionnel ;
b) à associer la solution de produit réactionnel et le support poreux de telle sorte que, à n'importe quel point au cours de la formation de la formulation de catalyseur sur un support, le volume total du produit de réaction ajouté au support poreux soit inférieur à quatre fois le volume total des pores du support poreux ; et
c) à introduire un modificateur de surface représenté par la formule : 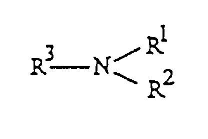 dans laquelle R³ représente l'hydrogène ou un groupe alkyle ramifié ou linéaire ayant 1 à 50 atomes de carbone ; R¹ et R² sont indépendamment identiques à R³ ou bien contiennent un autre hétéro-atome choisi entre O, N, P et S.

13. Procédé suivant la revendication 12, dans lequel le constituant de catalyseur du type métallocène est représenté par la formule générale : 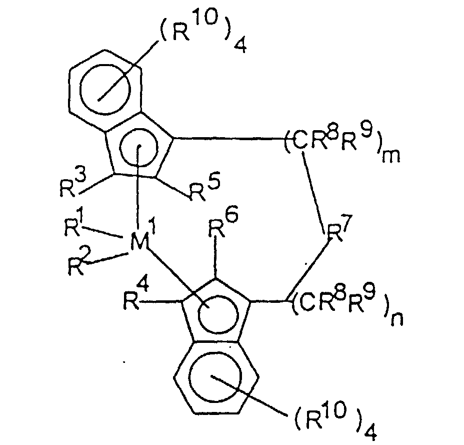 dans laquelle : M¹ représente un métal du Groupe 4, 5 ou 6 du Tableau périodique,
R¹ et R² sont identiques ou différents et sont choisis entre un atome d'hydrogène, un groupe alkyle en C₁ à C₁₀, un groupe alkoxy en C₁ à C₁₀, un groupe aryle en C₆ à C₁₀, un groupe aryloxy en C₆ à C₁₀, un groupe alcényle en C₂ à C₁₀, un groupe arylalkyle en C₇ à C₄₀, un groupe alkylaryle en C₇ à C₄₀, un groupe arylalcényle en C₈ à C₄₀, et un atome d'halogène ;
R³ et R⁴ représentent des atomes d'hydrogène ;
R⁵ et R⁶ sont identiques ou différents, de préférence identiques, et sont choisis entre un atome d'halogène, un groupe alkyle en C₁ à C₁₀, qui peut être halogéné, un groupe aryle en C₆ à C₁₀, qui peut être halogéné, un groupe alcényle en C₂ à C₁₀, un groupe arylalkyle en C₇ à C₄₀, un groupe alkylaryle en C₇ à C₄₀, un groupe arylalcényle en C₈ à C₄₀, et un radical -NR₂¹⁵, -SR¹⁵, -OR¹⁵, -OSiR₃¹⁵ ou -PR₂¹⁵, dans lequel R¹⁵ est choisi entre un atome d'halogène, un groupe alkyle en C₁ à C₁₀ et un groupe aryle en C₆ à C₁₀ ;
R⁷ représente un groupe 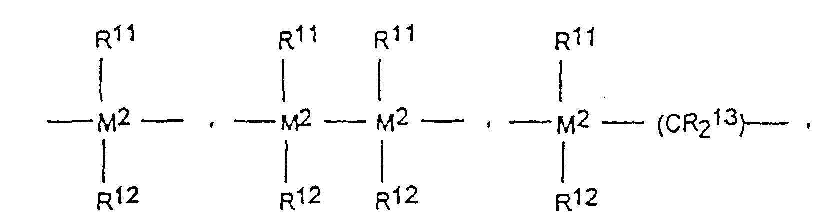 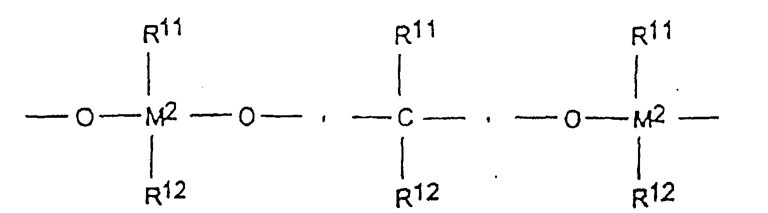 =BR¹¹,=AlR¹¹, Ge-, -Sn-, -O-, -S-, =SO, =SO₂, =NR¹¹, =CO ,PR¹¹, ou =P(O)R¹¹;
dans lequel :
R¹¹, R¹² et R¹³ sont identiques ou différents et représentent un atome d'hydrogène, un atome d'halogène, un groupe alkyle en C₁ à C₂₀, un groupe fluoralkyle en C₁ à C₂₀, un groupe aryle en C₆ à C₃₀, un groupe fluoroaryle en C₆ à C₃₀, un groupe alkoxy en C₁ à C₂₀, un groupe alcényle en C₂ à C₂₀, un groupe arylalkyle en C₇ à C₄₀, un groupe aryl-alcényle en C₈ à C₄₀, un groupe alkylaryle en C₇ à C₄₀, ou bien R¹¹ et R¹², ou R¹¹ et R¹³, conjointement avec les atomes qui les relient, peuvent former des systèmes cycliques ;
M² représente le silicium, le germanium ou l'étain ;
R⁸ et R⁹ sont identiques ou différents et répondent aux définitions mentionnées pour R¹¹ ;
m et n sont identiques ou différents et sont égaux à 0, 1 ou 2, la somme m + n étant égale à 0, 1 ou 2 ; et
les radicaux R¹⁰ sont identiques ou différents et répondent aux définitions indiquées pour R¹¹, R¹² et R¹³, deux radicaux R¹⁰ adjacents pouvant en outre être joints l'un à l'autre pour former un système cyclique.

14. Formulation de catalyseur sur un support produite par le procédé suivant l'une quelconque des revendications précédentes.

15. Procédé pour la polymérisation de propylène seul ou en association avec une ou plusieurs autres oléfines, ledit procédé comprenant la polymérisation en présence de la formulation de catalyseur sur un support suivant la revendication 14.
